# EUROPEAN PATENT SPECIFICATION

(11) **EP 4 253 255 B1**
(45) Date of publication and mention of the grant of the patent: **02.09.2026**
(21) Application number: 23164399.0
(22) Date of filing: 27.03.2023
(51) Int. Cl.: B64D 45/00, B64D 47/08, B64D 9/00, B60R 25/30

(54) **SYSTEMS AND METHODS FOR IDENTIFYING DAMAGE AND THEFT IN AN AIRCRAFT CARGO BAY**
SYSTEME UND VERFAHREN ZUR IDENTIFIZIERUNG VON SCHÄDEN UND DIEBSTAHL IN EINEM FLUGZEUGFRACHTRAUM
SYSTÈMES ET PROCÉDÉS D'IDENTIFICATION DE DOMMAGES ET DE VOL DANS UNE SOUTE À FRET D'AÉRONEF

(30) Priority: 28.03.2022 IN 202241017963; 27.06.2022 US 202217850762
(43) Date of publication of application: 04.10.2023
(73) Proprietor: Goodrich Corporation, Charlotte, NC 28217-4578 (US)
(72) Inventor: GOYAL, Nitin Kumar, Bangalore (IN); JHA, Ashutosh Kumar, Bangalore (IN); AINAPURE, Mahesh, Bangalore (IN)
(74) Representative: Dehns

(56) References cited:
- WO-A1-03/105480
- US-A1- 2007 241 897
- US-A1- 2010 213 313
- US-A1- 2022 063 901

## Description

### FIELD

The present disclosure relates generally to aircraft cargo management, more specifically, identification of cargo theft and damage.

### BACKGROUND

Aircraft cargo compartments are used to carry luggage and other cargo during a flight. Many cargo and passenger aircraft are equipped with semi-automatic Cargo Loading System (CLS) in the compartment. The CLS is an electrically powered system that allows Unit Load Devices (ULDs) to be carried into the aircraft cargo compartment. The primary benefit of the CLS is to reduce the manpower and loading/unloading time during shipment. ULDs and cargo pallets typically come in standardized shapes and sizes configured for bulk loading a large quantity of cargo. They also allow cargo to be efficiently loaded and fastened inside the aircraft, reducing loading time and the risk of cargo and/or aircraft damage. One of the many risks to shipping cargo via aircraft is cargo theft. For example, cargo theft crimes are believed to have increased, increasing costs for shippers and consumers alike. Moreover, improper cargo stacking, damaged cargo containers, and improper fastening of cargo have damaged aircraft fuselages, on-board cargo equipment, aircraft doors, and the like. Identifying cargo theft incidents may provide cost-benefits to shippers and consumers. Moreover, identifying cargo damage may reduce safety risks for aircraft operations and handling personnel, reduce compensation costs for lost luggage, and tend to minimize loss of reputation for airlines. US2022/063901A1, WO03/105480A1, US2010/213313A1 and US2007/241897A1 relate to monitoring methods. In particular, US2022/063901A1 discloses, according to its abstract, an equipment security system includes one or more sensors or optical recording devices disposed on or inside a cargo container. A computing device receives data from the one or more sensors or optical recording devices, determines whether an event has occurred at the cargo container, determines a geofence associated with the cargo container, and selects or configures a dynamic script including instructions that specify whether to begin recording an event occurring at or inside the cargo container, whether to record the event in an overwritable, local memory associated with at least one of the one or more sensors or optical recording devices or the computing device, parameters that govern how data associated with the event will be recorded, and whether to upload the data from the local memory to a remote server.

### SUMMARY

A method for monitoring an aircraft cargo bay according to claim 1 is disclosed herein. Preferred embodiments are disclosed in the dependent claims.

### BRIEF DESCRIPTION OF THE DRAWINGS

FIG. 1 illustrates a method for monitoring an aircraft cargo bay, in accordance with various embodiments;
FIG. 2 illustrates a method for monitoring cargo movement in an aircraft cargo bay, in accordance with various embodiments;
FIG. 3 illustrates a method of monitoring movement in an aircraft cargo bay, in accordance with various embodiments;
FIG. 4 illustrates a method of detecting, processing, and recording an event in an aircraft cargo bay, in accordance with various embodiments;
FIG. 5 illustrates a method of training an aircraft interface device to monitor cargo movement in an aircraft cargo bay, in accordance with various embodiments;
FIG. 6 illustrates a method of monitoring cargo loading in an aircraft cargo bay, in accordance with various embodiments;
FIG. 7 illustrates a method of scanning a cargo bay and calculating spacing between cargo and the cargo bay walls, in accordance with various embodiments;
FIG. 8 illustrates a method for monitoring an aircraft cargo bay in conjunction with an avionics system, in accordance with various embodiments;
FIG. 9 illustrates a method of monitoring an aircraft cargo bay based on a phase of a flight, in accordance with various embodiments;
FIG. 10 illustrates a method of monitoring an aircraft cargo bay based on a cargo bay door status, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein. Thus, the detailed description herein is presented for purposes of illustration only and not of limitation. The scope of the disclosure is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

An aircraft cargo bay may contain multiple image sensors, cameras, and motion sensors placed at different locations within the cargo bay. These systems may be used to inspect the cargo bay and cargo therein. These systems may be commanded by an onboard device, such as, for example, an aircraft interface device (AID), to scan the cargo bay, capture image data, and relay the data to the AID. Image data may be, for example, images and video feeds. The AID may process the data using Machine Learning and/or Deep Learning pre-trained neural networks to identify threats and/or classify events occurring within the cargo bay. Machine Learning may be, for example, a method of data analysis that automates analytical model building. Deep Learning may be a subset of Machine Learning, comprising multiple layers of analysis.

These identified threats and events may be, for example, cargo thefts, movement within the cargo bay, risks of damage to the aircraft, and damaged cargo containers. As will be described in further detail below, the pre-trained neural networks may be trained to identify these threats. These neural networks may be trained to detect movements in the cargo bay depending on a phase of a flight, or a status of a cargo bay door. The AID may activate a camera, commanding it to begin recording the cargo bay and capturing images of the cargo bay. The AID may interface with and relay data (including images and videos) to on board video storage systems, on ground infrastructure, and avionics systems aboard the aircraft. On board infrastructure may be, for example, a cloud.

A method of monitoring the cargo bay by the AID may be used to detect tampering, detect authorized and unauthorized access to the cargo area, count people entering and exiting the cargo bay, detect the presence of humans and unexpected items in the cargo bay through thermal imaging, continuously monitor cargo for theft identification, and generate alarms in the event of unauthorized personnel entering the cargo bay or damage to the cargo bay. Accordingly, the method may reduce the need for manual inspection of the cargo bay and/or eliminate the need for constant human monitoring of long-duration video feeds of the cargo bay.

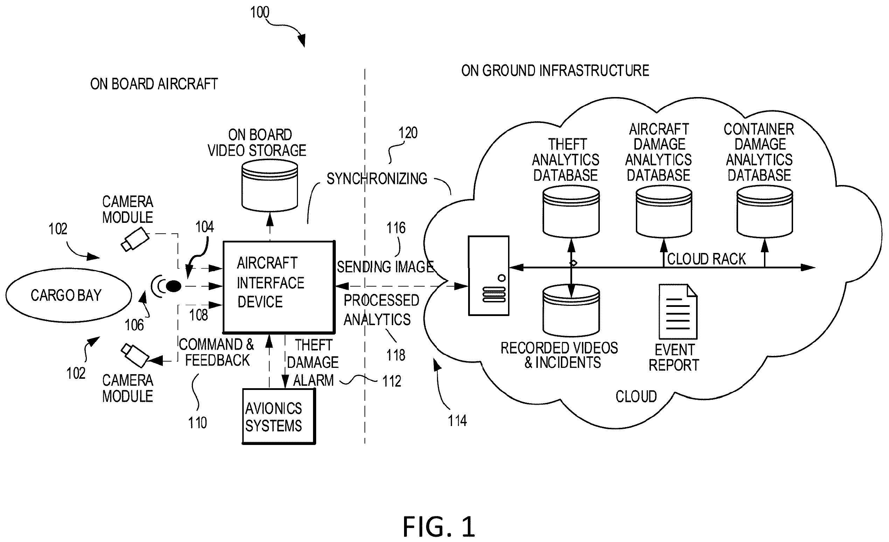

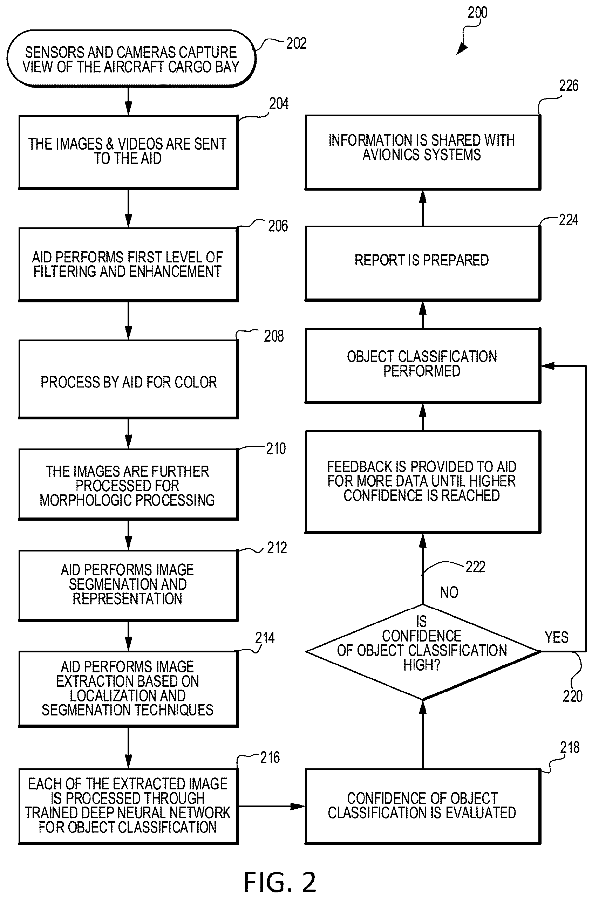

Referring to FIGS. 1 and 2, a method for monitoring 100 an aircraft cargo bay is shown. As shown in FIG. 1, the method comprises receiving (step 102), by an aircraft interface device (AID), image data from a camera of a cargo bay of an aircraft. In various embodiments, the method may comprise the AID electrically communicating (step 104) with one or more motion sensors. Motion sensors may be disposed anywhere in the cargo bay. For example, motion sensors may be disposed proximate cargo in the cargo bay.

The method further comprises detecting (step 106), by the aircraft interface device, movement in the cargo bay. The AID may be configured to command the motion sensors to detect particular movements within the cargo bay. For example, the motion sensors may detect loading and unloading of cargo, human movement, and the like. In response to movement detection, the method comprises directing (step 108), by the AID, the camera to activate.
In various embodiments, the method may comprise commanding (step 110), by the AID, the camera to adjust a view of the cargo bay. In various embodiments, the cameras may be coupled to the motion sensors throughout the cargo bay. The cameras may be installed at or near aircraft cargo doors. In various embodiments, the cameras may provide a clear view of the entire aircraft cargo bay, covering various angles of the cargo bay. In various embodiments, the sensors and cameras may be configured to capture (step 102) views of the aircraft cargo bay in the form of videos and images.

Referring to FIG. 2, the method further comprises processing (step 200), by the AID, the captured image data. The processing step may comprise the AID in electrical communication with the cameras and sensors, wherein the camera, sensors, and AID are in a continuous command and feedback loop to capture view(s) of the aircraft cargo bay (step 202). The image data may be sent (step 204) to the AID from the cameras. In various embodiments, the AID may be configured to process the image data for event detection. In various embodiments, the AID may be configured to process the image data for enhancement and may command the cameras to do the same. In various embodiments, the AID may perform the first level of filtering and enhancement (step 206).

The processing step may further comprise the AID scanning the image data for image color (step 208). In various embodiments, the image data may be further processed for morphologic processing (step 210), relating the image data to specific objects. The processing step further comprises AID performing image segmentation and representation (step 212). Furthermore, AID performs image extraction based on localization and segmentation techniques (step 214).

The AID is configured to deploy pre-trained neural network based algorithms. The AID's algorithms is further configured for event classification and movement detection. Each extracted image is further processed through the trained deep neural network for object and/or movement classification (step 216). This trained deep neural network evaluates a confidence of object classification (step 218). If the confidence is high, then the AID performs the object classification (step 220). If the confidence is not high, then feedback is provided within AID to acquire more images, videos, and/or scans of the objects and movements at issue until a higher confidence is reached (step 222). In various embodiments, AID may prepare a report (step 224) and share the report with an avionics system (step 226). In various embodiments, the AID may be configured to relay the images and recordings to an on board video storage system. Referring back to FIG. 1, the method further comprises generating (step 112), by the AID, an alarm based on a theft event classification. In various embodiments, the generating (step 112) may comprise transmitting the alarm to an aircraft.

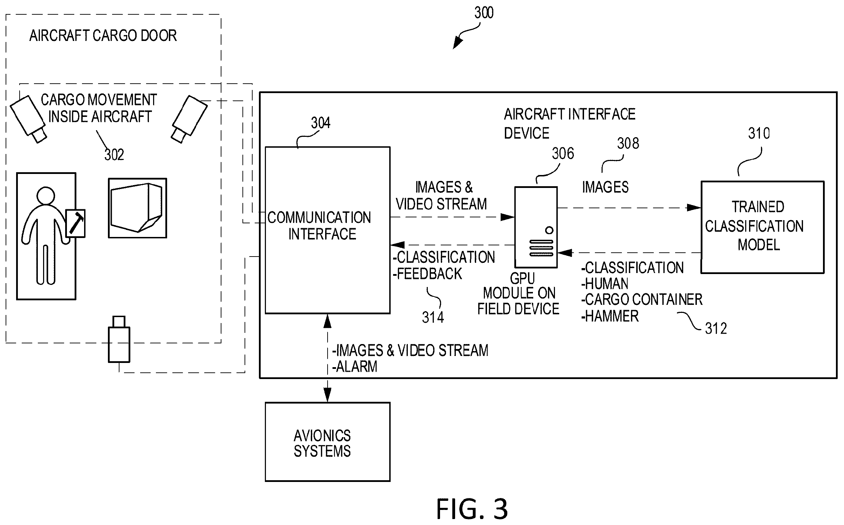

The feedback loop between the AID, cameras, and sensors may enable the AID to detect both normal and unusual events. In various embodiments, the camera itself may be configured to detect unusual events. As shown in feedback loop 300 in FIG. 3, and with continued reference to FIGS. 1 and 2, unusual events may be, for example, suspicious movements 302 of personnel near cargo containers, the presence of specialized tools configured to break locks or boxes, movement of cargo boxes when the boxes should be stationary and locked, lights turned on or off, smoke, fire, or flames in the cargo bay, bag tampering gestures, and the like. Upon detecting unusual events, it may be advantageous for the AID to command the camera to further enhance the image data using edge computing capabilities. The camera edge computing capabilities may reduce the amount of image data in the feedback loop between the AID and camera.

In various embodiments, and as shown in FIG. 3, a communication interface 304 of the AID may relay the image data to a graphics processing unit (GPU) module 306. The GPU 306 may then send the image data 308 to a trained classification model 310 of the AID. The trained classification model 310 may feed back one or more classifications 312 to the GPU 306, which may, in turn, feed the classifications 314 to the communication interface. These classifications 314 may be associated with unusual events, such as theft, or normal events.

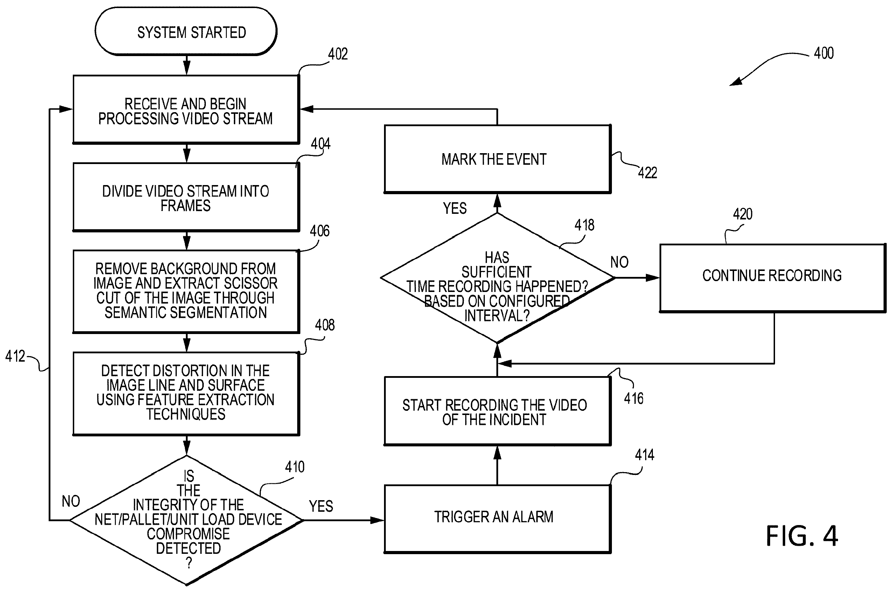

For example, a method (step 400) for detecting a theft and tampering event is shown in FIG. 4. In various embodiments, the AID may receive (step 402) a video stream and begin processing the stream. For instance, the AID may divide (step 404) the video stream into frames. The AID may remove background (step 406) from captured images and extract a scissor cut of an image through semantic segmentation. The AID may detect (step 408) distortion in the image line and surface using feature extraction techniques. In various embodiments, the AID may then detect (step 410) whether the integrity of aircraft cargo is compromised (i.e. tampering). If not, the AID may revert (step 412) to receiving video streams.

If tampering is detected, the AID triggers (step 414) an alarm. The AID also commands the cameras to start recording (step 416) and continuously record the ongoing tampering incident. In the absence of human intervention, the AID determines (step 418) whether sufficient time recording has occurred based on a pre-configured time interval. If not, the AID may command (step 420) the camera to continue recording and monitoring the tampering incident. If sufficient recording data has been obtained, the AID marks (step 422) the recording as an event. This marked recording may be further relayed to and analyzed by personnel and the appropriate authorities.

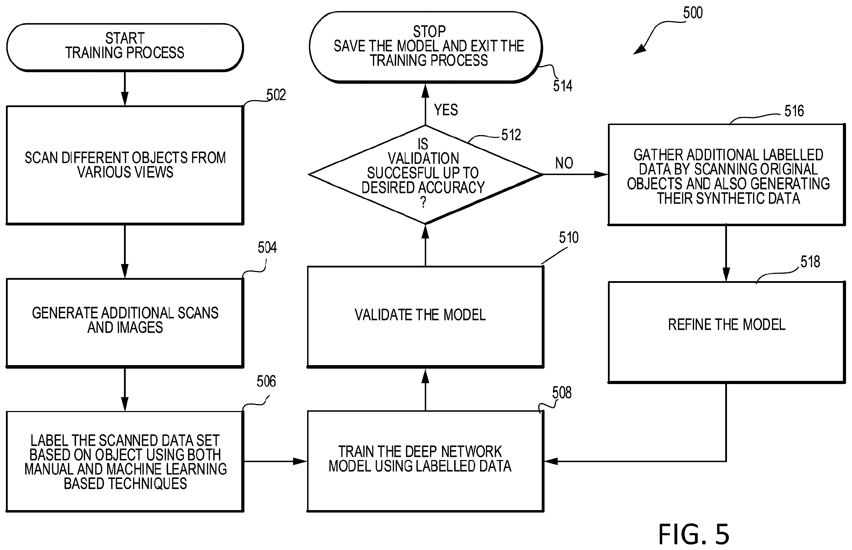

As shown in FIG. 5, a model for the AID to classify unusual events, movements, and objects may be trained (step 500) and refined. The neural networks may be trained in advance under laboratory conditions using forward and backward propagation techniques to establish a relationship between images of objects and the live scanned images coming from the AID. These objects may be, for example, humans, tools, cargo, Unit Load Devices (ULDs), cargo pallets, aircraft doors, cargo rollers, aircraft fuselages, and the like. The objects may be scanned (step 502) from a variety of angles and views. The scanned images of the objects may also be supplemented by synthetically generating (step 504) images using computers, which may be fed into the model. The scanned data may be labeled (step 506) into data sets based on the object using both manual and machine learning based techniques.

In various embodiments, the model may embody principles of fitting in special and temporal dependencies to perform object classification (human, cargo, aircraft door, tools, etc.) Accordingly, the model may be trained (step 508) using labelled data. In various embodiments, the model may be validated (step 510) and considered (step 512) for a desired accuracy. In the desired accuracy is reached, the training process may cease and the model saved (step 514). If the desired accuracy is not reached, additional labelled data may be gathered (step 516) by scanning the original objects and generating additional synthetic data. The model may then be refined (step 518), retrained, and validated to the desired accuracy. The model may then be deployed in across the AID, camera, and other on board and on ground infrastructures.

In continued reference to FIG. 1, the method may comprise interfacing (step 114), by the AID, the AID with on ground infrastructure. In various embodiments, the on ground infrastructure may be, for example, a cloud. This step may occur prior to, in conjunction with, or after the processing step (step 200). The interfacing (step 114) may further comprise sending (step 116), by the AID, captured image data to the on ground infrastructure. The on ground infrastructure may be configured to analyze the captured image data based on prefilled data using machine learning algorithms. The on ground infrastructure may be further configured to process the captured image data. The on ground infrastructure may take on the AID's aforementioned processing capabilities, or it may reinforce those capabilities. Accordingly, the on ground infrastructure may enable offloading the computing and storage requirements of on board monitoring systems. In various embodiments, the AID and on ground infrastructure may communicate via an AID-On Ground interface, wherein the AID may send captured data to the on ground infrastructure and may receive processed image data from the on ground infrastructure. Accordingly, the on ground infrastructure may convert unstructured data into structured date for storage, deeper analysis, insights delivery, and metadata extraction.

In various embodiments, the interfacing (step 114) may comprise receiving (step 118), by the AID, a processed analytics output from the on ground infrastructure. In various embodiments, the method may further comprise synchronizing (step 120), by the AID, the AID with the on ground infrastructure. The on ground infrastructure may provide network adaptations and assist the AID in the event of resource losses, such as malfunctioning or obstructed cameras. In various embodiments, the on ground infrastructure may contain software logic to stitch together the videos captured by different cameras. The on ground infrastructure may reconcile the various views of the cargo bay and generate a complete context of the cargo bay scene under observation. The on ground infrastructure may comprise high performance computing capabilities and parallel computing enabled to host and run video processing algorithms, video quality enhancers, deep learning and machine learning neural network modules, storage, and a host of event classification datasets. In various embodiments, the method may comprise synchronizing, by the AID, the AID with the on ground infrastructure for at least one of updated neural network modules and algorithm upgrades.

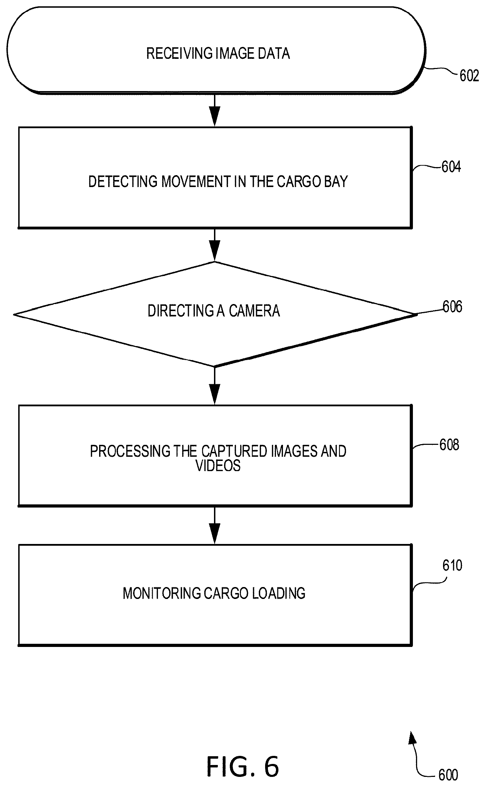

Referring to FIG. 6, a method for monitoring an aircraft cargo bay is shown. Specifically, a method 600 for monitoring, by an AID, loading of cargo based on a cargo-loading event classification is shown. The method 600 may comprise receiving (step 602), by the AID, image data from a camera in a cargo bay of an aircraft. In various embodiments, the method may comprise detecting (step 604), by the AID, movement in the cargo bay. In various embodiments, the method may comprise directing (step 606), by the AID, the camera to activate. In various embodiments, the camera may be configured to record the cargo bay. In various embodiments, the camera may be configured to capture image data.

The method 600 may further comprise processing (step 608), by the AID, the captured image data. In various embodiments, the AID may be configured to process the image data for event detection. In various embodiments, the AID may be configured to process the image data for enhancement. In various embodiments, the AID may be configured to deploy pre-trained neural network based algorithms. The algorithms of the AID may be further configured for event classification. The method may further comprise monitoring (step 610), by the AID, loading of cargo based on a cargo-loading event classification.

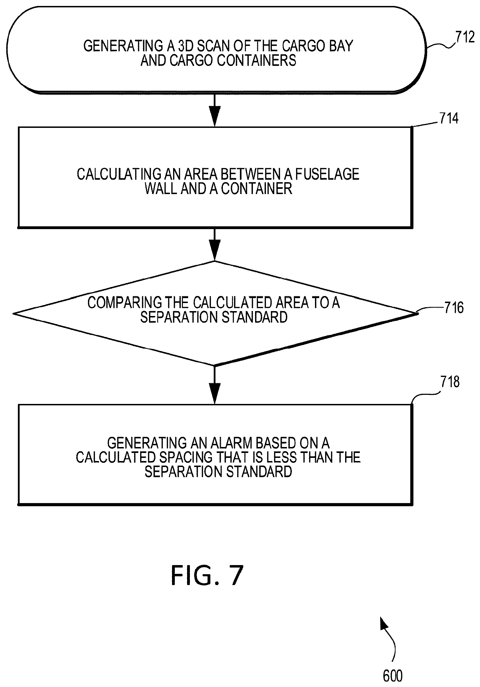

As shown in FIG. 7, in various embodiments, the method 600 for monitoring may further comprise generating (step 712), by the AID, a three-dimensional scan of the cargo bay. The generating (step 721) may occur as the AID receives (step 602) image data from the camera, before the AID receives the image data, or after the AID receives the image data. In various embodiments, the generating (step 712) may further comprise generating, by the AID, a three-dimensional scan of cargo containers.

In various embodiments, the method 600 may further comprise calculating (step 714), by the AID, an area between a fuselage wall of the cargo bay and a container based on the three-dimensional scans. The method 600 may further comprise comparing (step 716), by the AID, the calculated area to a minimum separation standard. The calculating (step 714) and comparing (step 716) may occur as the AID processes (step 608) the captured image data and scans. In various embodiments, the minimum separation standard may be a predetermined standard configured to prevent damage to fuselage walls from cargo. A minimum separation standard may be configured to prevent damage to cargo. The minimum separation standard may be specific to each aircraft line or model. Furthermore, the AID may contain these configurable parameters in software memory. In various embodiments, the method 600 may further comprise generating (step 718), by the AID, an alarm based on a calculated spacing that is less than the minimum separation standard. In various embodiments, the generating (step 718) may comprise transmitting the alarm to an aircraft. The generating (step 718) may occur during or after processing (step 608).

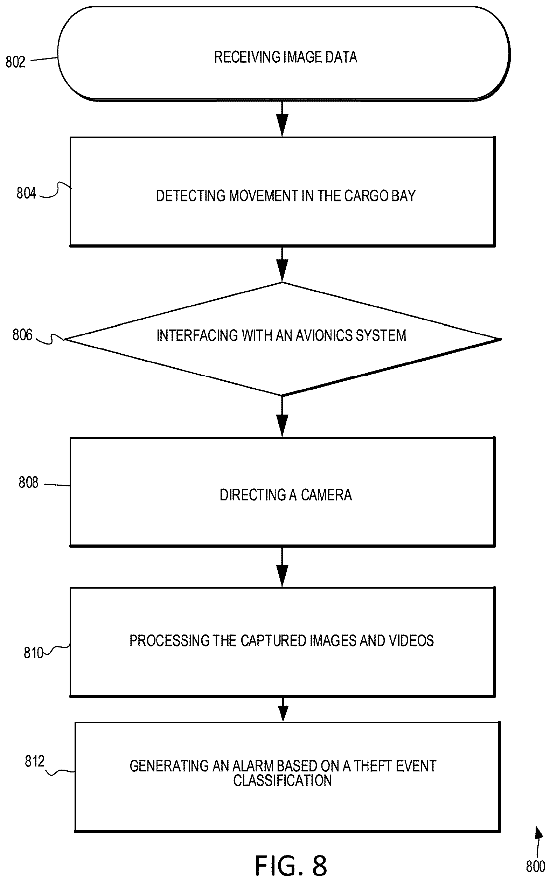

With reference to FIG. 8, a method 800 for monitoring an aircraft cargo bay is shown. The method 800 may comprise receiving (step 802), by the AID, image data from a camera in a cargo bay of an aircraft. In various embodiments, the method 800 may comprise detecting (step 804), by the AID, movement in the cargo bay. In various embodiments, the method 800 may comprise interfacing (step 806), by the AID, the AID with an aircraft avionics system. In various embodiments, the method 800 may comprise directing (step 808), by the AID, the camera to activate. In various embodiments, the camera may be configured to record the cargo bay. In various embodiments, the camera may be configured to capture image data.

The method 800 may further comprise processing (step 810), by the AID, the captured image data. In various embodiments, the AID may be configured to process the image data for event detection. In various embodiments, the AID may be configured to process the image data for enhancement. In various embodiments, the AID may be configured to deploy pre-trained neural network based algorithms. The algorithms of the AID may be further configured for event classification. The method 800 may further comprise generating (step 812), by the AID, an alarm based on a theft event classification. In various embodiments, the generating (step 812) may comprise transmitting the alarm to an aircraft.

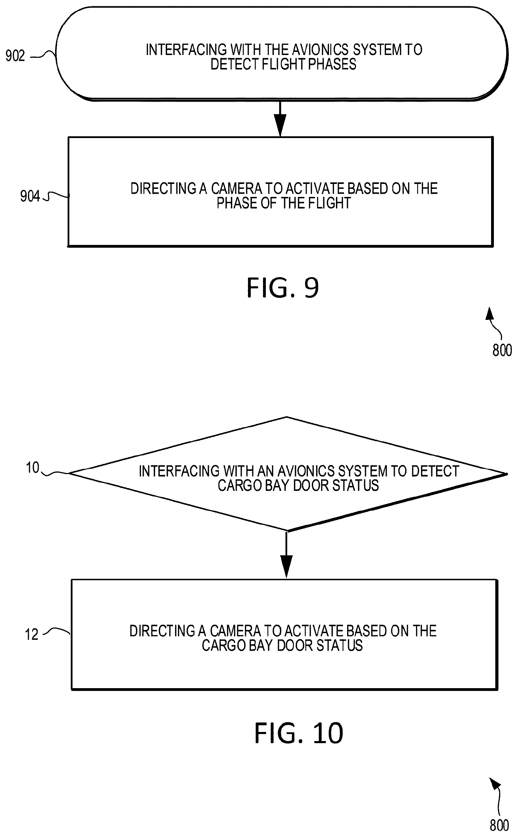

As shown in FIG. 9, the method 800 may further comprise interfacing (step 902), by the AID, the AID with the aircraft avionics system to detect phases of a flight. The AID may interface (step 902) with the aircraft avionics system throughout monitoring 800. In various embodiments, the AID may interface (step 902) with the aircraft avionics system as the captured image data is being processed (step 810). In various embodiments, the directing step (step 808) may further comprise directing (step 904), by the AID, the camera to activate based on a phase of the flight.

As shown in FIG. 10, the method 800 may further comprise interfacing (step 10) by the AID, the AID with the aircraft avionics system to detect a cargo bay door status. The AID may interface (step 10) with the aircraft avionics system throughout monitoring 800. In various embodiments, the AID may interface (step 10) with the aircraft avionics system as the captured image data is being processed (step 810). In various embodiments, the directing (step 808) may further comprise directing (step 12), by the AID, the camera to activate based on the cargo bay door status. The camera may be configured to deactivate based on a cargo bay door status indicating that the cargo bay doors are closed. In various embodiments, the camera may be configured to enter an idle setting (i.e., sleep mode) based on a cargo bay door status indicating that the cargo bay doors are closed.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method for monitoring an aircraft cargo bay, comprising:
receiving (102), by an aircraft interface device, image data from a camera in a cargo bay of an aircraft;
detecting (106), by the aircraft interface device, movement in the cargo bay;
directing (108), by the aircraft interface device, the camera to activate, wherein the camera is configured to capture the image data of the cargo bay;
processing (200), by the aircraft interface device, the captured image data for event detection and event classification, including:
performing (212), by the aircraft interface device, image segmentation and representation;
performing (214), by the aircraft interface device, image extraction based on localization and segmentation techniques to generate an extracted image from the captured image data;
processing (216), by the aircraft interface device, the extracted image through a trained, deep neural network for an object classification;
evaluating (218), by the trained deep neural network, a confidence of the object classification; and
providing (222) within the aircraft interface device feedback to acquire images, videos, and/or scans in response to the confidence being low until a higher confidence is reached; and
generating (112), by the aircraft interface device, an alarm based on a theft event classification;
commanding (416), by the aircraft interface device, the camera to start recording and continuously record video based on the theft event classification;
determining (418), by the aircraft interface device, whether sufficient time recording has occurred based on a pre-configured time interval; and
marking (422), by the aircraft interface device, the recording as an event if sufficient time recording has occurred.

2. The method of claim 1, wherein the detecting further comprises the aircraft interface device electrically communicating with a motion sensor; and optionally wherein the motion sensor is configured to detect movement in the cargo bay.

3. The method of claim 1 or 2, further comprising: commanding (110), by the aircraft interface device, the camera to adjust a view of the cargo bay.

4. The method of any preceding claim, further comprising: interfacing (114), by the aircraft interface device, the aircraft interface device with on ground infrastructure.

5. The method of claim 4, wherein the interfacing further comprises sending (116), by the aircraft interface device, the captured image data to the on ground infrastructure, wherein the on ground infrastructure is configured to analyze the captured image data and is further configured to process the captured image data; and optionally
wherein the interfacing further comprises receiving, by the aircraft interface device, processed image data from the on ground infrastructure, and synchronizing (120), by the aircraft interface device, the aircraft interface device with the on ground infrastructure.

6. The method of claim 1, further comprising:
monitoring, by the aircraft interface device, loading of cargo based on a cargo-loading event classification.

7. The method of claim 6, wherein the monitoring further comprises monitoring, by the aircraft interface device, movement within the aircraft cargo bay.

8. The method of claim 6 or 7, further comprising:
generating, by the aircraft interface device, a three-dimensional scan of the cargo bay, wherein the generating further comprises generating, by the aircraft interface device, a three-dimensional scan of cargo containers.

9. The method of claim 8, further comprising:
calculating, by the aircraft interface device, an area between a fuselage wall of the cargo bay and a container based on the three-dimensional scans; and optionally,
further comprising:
comparing, by the aircraft interface device, the calculated area to a minimum separation standard; and
generating, by the aircraft interface device, an alarm based on a calculated area that is less than the minimum separation standard.

10. The method of claim 1, further comprising:
interfacing, by the aircraft interface device, the aircraft interface device with an aircraft avionics system;
wherein the aircraft interface device is configured to process the image data for enhancement;
wherein the camera is configured to record the cargo bay, and
wherein generating the alarm comprises transmitting the alarm to an aircraft.

11. The method of claim 10,
wherein the interfacing further comprises interfacing, by the aircraft interface device, the aircraft interface device with the aircraft avionics system to detect phases of a flight; and optionally
wherein the directing further comprises directing, by the aircraft interface device, the camera to activate based on a phase of the flight.

12. The method of claim 10 or 11, wherein the interfacing further comprises interfacing, by the aircraft interface device, the aircraft interface device with the aircraft avionics system to detect a cargo bay door status.

13. The method of claim 12,
wherein the directing further comprises directing, by the aircraft interface device, the camera to activate based on the cargo bay door status.

## Patentansprüche

1. Verfahren zum Überwachen eines Luftfahrzeugfrachtraums, umfassend:
Empfangen (102) von Bilddaten von einer Kamera in einem Frachtraum eines Luftfahrzeugs durch eine Luftfahrzeugschnittstellenvorrichtung;
Detektieren (106) von Bewegung in dem Frachtraum durch die Luftfahrzeugschnittstellenvorrichtung;
Anweisen (108) der Kamera durch die Luftfahrzeugschnittstellenvorrichtung, sich zu aktivieren, wobei die Kamera dazu konfiguriert ist, die Bilddaten des Frachtraums aufzunehmen;
Verarbeiten (200) der aufgenommenen Bilddaten zur Ereignisdetektion und Ereignisklassifizierung durch die Luftfahrzeugschnittstellenvorrichtung, einschließend:
Durchführen (212) von Bildsegmentierung und -repräsentation durch die Luftfahrzeugschnittstellenvorrichtung;
Durchführen (214) von Bildextraktion basierend auf Lokalisierungs- und Segmentierungstechniken durch die Luftfahrzeugschnittstellenvorrichtung, um ein extrahiertes Bild aus den aufgenommenen Bilddaten zu erzeugen;
Verarbeiten (216) des extrahierten Bildes durch ein trainiertes, tiefes neuronales Netzwerk für eine Objektklassifizierung durch die Luftfahrzeugschnittstellenvorrichtung;
Auswerten (218) einer Konfidenz der Objektklassifizierung durch das trainierte tiefe neuronale Netzwerk; und
Bereitstellen (222) von Feedback innerhalb der Luftfahrzeugschnittstellenvorrichtung, um Bilder, Videos und/oder Scans zu erfassen, als Reaktion darauf, dass die Konfidenz niedrig ist, bis eine höhere Konfidenz erreicht wird; und
Erzeugen (112) eines Alarms basierend auf einer Diebstahlereignisklassifizierung durch die Luftfahrzeugschnittstellenvorrichtung;
Befehlen (416) der Kamera durch die Luftfahrzeugschnittstellenvorrichtung, mit dem Aufzeichnen zu beginnen und kontinuierlich Video aufzuzeichnen, basierend auf der Diebstahlereignisklassifizierung;
Bestimmen (418) durch die Luftfahrzeugschnittstellenvorrichtung, ob eine ausreichende Zeitaufzeichnung erfolgt ist, basierend auf einem vorkonfigurierten Zeitintervall; und
Markieren (422) der Aufzeichnung als ein Ereignis durch die Luftfahrzeugschnittstellenvorrichtung, wenn eine ausreichende Zeitaufzeichnung erfolgt ist.

2. Verfahren nach Anspruch 1, wobei das Detektieren ferner umfasst, dass die Luftfahrzeugschnittstellenvorrichtung mit einem Bewegungssensor elektrisch kommuniziert; und wobei optional der Bewegungssensor dazu konfiguriert ist, Bewegung in dem Frachtraum zu detektieren.

3. Verfahren nach Anspruch 1 oder 2, ferner umfassend:
Befehlen (110) der Kamera durch die Luftfahrzeugschnittstellenvorrichtung, eine Ansicht des Frachtraums einzustellen.

4. Verfahren nach einem der vorhergehenden Ansprüche, ferner umfassend:
Koppeln (114) der Luftfahrzeugschnittstellenvorrichtung mit einer Bodeninfrastruktur durch die Luftfahrzeugschnittstellenvorrichtung.

5. Verfahren nach Anspruch 4, wobei das Koppeln ferner Senden (116) der aufgenommenen Bilddaten an die Bodeninfrastruktur durch die Luftfahrzeugschnittstellenvorrichtung umfasst, wobei die Bodeninfrastruktur dazu konfiguriert ist, die aufgenommenen Bilddaten zu analysieren, und ferner dazu konfiguriert ist, die aufgenommenen Bilddaten zu verarbeiten; und optional
wobei das Koppeln ferner Empfangen von verarbeiteten Bilddaten von der Bodeninfrastruktur durch die Luftfahrzeugschnittstellenvorrichtung und Synchronisieren (120) der Luftfahrzeugschnittstellenvorrichtung mit der Bodeninfrastruktur durch die Luftfahrzeugschnittstellenvorrichtung umfasst.

6. Verfahren nach Anspruch 1, ferner umfassend:
Überwachen des Ladens von Fracht durch die Luftfahrzeugschnittstellenvorrichtung basierend auf einer Frachtladeereignisklassifizierung.

7. Verfahren nach Anspruch 6, wobei das Überwachen ferner Überwachen von Bewegung innerhalb des Luftfahrzeugfrachtraums durch die Luftfahrzeugschnittstellenvorrichtung umfasst.

8. Verfahren nach Anspruch 6 oder 7, ferner umfassend:
Erzeugen eines dreidimensionalen Scans des Frachtraums durch die Luftfahrzeugschnittstellenvorrichtung, wobei das Erzeugen ferner Erzeugen eines dreidimensionalen Scans von Frachtcontainern durch die Luftfahrzeugschnittstellenvorrichtung umfasst.

9. Verfahren nach Anspruch 8, ferner umfassend:
Berechnen einer Fläche zwischen einer Rumpfwand des Frachtraums und einem Container durch die Luftfahrzeugschnittstellenvorrichtung basierend auf den dreidimensionalen Scans; und optional ferner umfassend:
Vergleichen der berechneten Fläche mit einem Mindestabstandsstandard durch die Luftfahrzeugschnittstellenvorrichtung; und
Erzeugen eines Alarms durch die Luftfahrzeugschnittstellenvorrichtung basierend auf einer berechneten Fläche, die kleiner als der Mindestabstandsstandard ist.

10. Verfahren nach Anspruch 1, ferner umfassend:
Koppeln der Luftfahrzeugschnittstellenvorrichtung mit einem Luftfahrzeugavioniksystem durch die Luftfahrzeugschnittstellenvorrichtung;
wobei die Luftfahrzeugschnittstellenvorrichtung dazu konfiguriert ist, die Bilddaten zur Verbesserung zu verarbeiten;
wobei die Kamera dazu konfiguriert ist, den Frachtraum aufzuzeichnen, und
wobei das Erzeugen des Alarms Übertragen des Alarms an ein Luftfahrzeug umfasst.

11. Verfahren nach Anspruch 10,
wobei das Koppeln ferner Koppeln der Luftfahrzeugschnittstellenvorrichtung mit dem Luftfahrzeugavioniksystem durch die Luftfahrzeugschnittstellenvorrichtung umfasst, um Phasen eines Fluges zu detektieren; und optional
wobei das Anweisen ferner Anweisen der Kamera durch die Luftfahrzeugschnittstellenvorrichtung umfasst, sich basierend auf einer Phase des Fluges zu aktivieren.

12. Verfahren nach Anspruch 10 oder 11,
wobei das Koppeln ferner Koppeln der Luftfahrzeugschnittstellenvorrichtung mit dem Luftfahrzeugavioniksystem durch die Luftfahrzeugschnittstellenvorrichtung umfasst, um einen Frachtraumtürstatus zu detektieren.

13. Verfahren nach Anspruch 12, wobei das Anweisen ferner Anweisen der Kamera durch die Luftfahrzeugschnittstellenvorrichtung umfasst, sich basierend auf dem Frachtraumtürstatus zu aktivieren.

## Revendications

1. Procédé de surveillance d'une soute à fret d'aéronef, comprenant :
la réception (102), par un dispositif d'interface d'aéronef, de données d'image provenant d'une caméra dans une soute à fret d'un aéronef ;
la détection (106), par le dispositif d'interface d'aéronef, de mouvement dans la soute à fret ;
la direction (108), par le dispositif d'interface d'aéronef, de la caméra pour qu'elle s'active, dans lequel la caméra est configurée pour capturer les données d'image de la soute à fret ; le traitement (200), par le dispositif d'interface d'aéronef, des données d'image capturées pour la détection et la classification d'événements, comportant :
la réalisation (212), par le dispositif d'interface d'aéronef, d'une segmentation et d'une représentation d'image ; la réalisation (214), par le dispositif d'interface d'aéronef, d'une extraction d'image basée sur des techniques de localisation et de segmentation pour générer une image extraite à partir des données d'image capturées ;
le traitement (216), par le dispositif d'interface d'aéronef, de l'image extraite à travers un réseau neuronal profond entraîné pour une classification d'objets ;
l'évaluation (218), par le réseau neuronal profond entraîné, d'une confiance dans la classification d'objets ; et
la fourniture (222) au sein du dispositif d'interface d'aéronef d'un retour d'information pour acquérir des images,
des vidéos et/ou des analyses en réponse à un niveau de confiance faible jusqu'à ce qu'un niveau de confiance plus élevé soit atteint ; et
la génération (112), par le dispositif d'interface d'aéronef, d'une alarme basée sur une classification d'événement de vol ;
la commande (416), par le dispositif d'interface d'aéronef, de la caméra pour démarrer l'enregistrement et enregistrer en continu une vidéo basée sur la classification d'événement de vol ;
la détermination (418), par le dispositif d'interface d'aéronef, établissant si un enregistrement temporel suffisant a eu lieu sur la base d'un intervalle de temps préconfiguré ; et
le marquage (422), par le dispositif d'interface d'aéronef, de l'enregistrement comme un événement si un enregistrement temporel suffisant a eu lieu.

2. Procédé selon la revendication 1, dans lequel la détection comprend en outre la communication électrique, par le dispositif d'interface d'aéronef, avec un capteur de mouvement ; et, éventuellement, dans lequel le capteur de mouvement est configuré pour détecter un mouvement dans la soute à fret.

3. Procédé selon la revendication 1 ou 2, comprenant en outre : la commande (110), par le dispositif d'interface d'aéronef, de la caméra pour ajuster une vue de la soute à fret.

4. Procédé selon une quelconque revendication précédente, comprenant en outre :
l'interfaçage (114), par le dispositif d'interface d'aéronef, du dispositif d'interface d'aéronef avec une infrastructure au sol.

5. Procédé selon la revendication 4, dans lequel l'interfaçage comprend en outre l'envoi (116), par le dispositif d'interface d'aéronef, des données d'image capturées à l'infrastructure au sol, dans lequel l'infrastructure au sol est configurée pour analyser les données d'image capturées et est en outre configurée pour traiter les données d'image capturées ; et, éventuellement
dans lequel l'interfaçage comprend en outre la réception, par le dispositif d'interface d'aéronef, de données d'image traitées provenant de l'infrastructure au sol, et la synchronisation (120), par le dispositif d'interface d'aéronef, du dispositif d'interface d'aéronef avec l'infrastructure au sol.

6. Procédé selon la revendication 1, comprenant en outre :
la surveillance, par le dispositif d'interface d'aéronef, du chargement du fret basé sur une classification d'événement de chargement de fret.

7. Procédé selon la revendication 6, dans lequel la surveillance comprend en outre la surveillance, par le dispositif d'interface d'aéronef, de mouvement au sein de la soute à fret d'aéronef.

8. Procédé selon la revendication 6 ou 7, comprenant en outre : la génération, par le dispositif d'interface d'aéronef, d'un balayage tridimensionnel de la soute à fret, dans lequel la génération comprend en outre la génération, par le dispositif d'interface d'aéronef, d'un balayage tridimensionnel de conteneurs de fret.

9. Procédé selon la revendication 8, comprenant en outre :
le calcul, par le dispositif d'interface d'aéronef, d'une aire entre une paroi de fuselage de la soute à fret et un conteneur sur la base des balayages tridimensionnels ; et, éventuellement, comprenant en outre :
la comparaison, par le dispositif d'interface d'aéronef, de l'aire calculée à une norme de séparation minimale ; et
la génération, par le dispositif d'interface d'aéronef, d'une alarme basée sur une aire calculée qui est inférieure à la norme de séparation minimale.

10. Procédé selon la revendication 1, comprenant en outre :
l'interfaçage, par le dispositif d'interface d'aéronef, du dispositif d'interface d'aéronef avec un système avionique d'aéronef ;
dans lequel le dispositif d'interface d'aéronef est configuré pour traiter les données d'image pour amélioration ;
dans lequel la caméra est configurée pour enregistrer la soute à fret, et
dans lequel la génération de l'alarme comprend la transmission de l'alarme à un aéronef.

11. Procédé selon la revendication 10,
dans lequel l'interfaçage comprend en outre l'interfaçage, par le dispositif d'interface d'aéronef, du dispositif d'interface d'aéronef avec le système avionique d'aéronef pour détecter des phases d'un vol ; et, éventuellement
dans lequel la direction comprend en outre la direction, par le dispositif d'interface d'aéronef, de l'activation de la caméra sur la base d'une phase du vol.

12. Procédé selon la revendication 10 ou 11,
dans lequel l'interfaçage comprend en outre l'interfaçage, par le dispositif d'interface d'aéronef, du dispositif d'interface d'aéronef avec le système avionique d'aéronef pour détecter un état de porte de soute à fret.

13. Procédé selon la revendication 12, dans lequel la direction comprend en outre la direction, par le dispositif d'interface d'aéronef, de l'activation de la caméra sur la base de l'état de porte de soute à fret.
